(19) **Europäisches Patentamt / European Patent Office / Office européen des brevets**

(11) **EP 4 358 192 A1**

(12) # EUROPEAN PATENT APPLICATION
published in accordance with Art. 153(4) EPC

(43) Date of publication:
**24.04.2024 Bulletin 2024/17**

(21) Application number: **22948226.0**

(22) Date of filing: **27.06.2022**

(51) International Patent Classification (IPC):
**H01M 4/62** (2006.01)      **H01M 4/36** (2006.01)

(52) Cooperative Patent Classification (CPC):
**H01M 4/36; H01M 4/62;** Y02E 60/10

(86) International application number:
**PCT/CN2022/101515**

(87) International publication number:
**WO 2024/000102 (04.01.2024 Gazette 2024/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited**
**Ningde, Fujian 352100 (CN)**

(72) Inventors:
 • **SONG, Peidong**
 **Ningde, Fujian 352100 (CN)**

 • **LI, Xuan**
 **Ningde, Fujian 352100 (CN)**
 • **SUN, Xin**
 **Ningde, Fujian 352100 (CN)**
 • **WU, Lili**
 **Ningde, Fujian 352100 (CN)**
 • **CHEN, Xingbu**
 **Ningde, Fujian 352100 (CN)**
 • **YUN, Liang**
 **Ningde, Fujian 352100 (CN)**
 • **DONG, Miaomiao**
 **Ningde, Fujian 352100 (CN)**

(74) Representative: **Gong, Jinping**
**CocreateIP**
**Neumarkterstr. 21**
**81673 München (DE)**

(54) **NEGATIVE ELECTRODE SHEET AND PREPARATION METHOD THEREFOR, SECONDARY BATTERY, BATTERY MODULE, BATTERY PACK, AND ELECTRIC DEVICE**

(57)     The present application provides a negative electrode plate for a secondary battery and a preparation method therefor, and a secondary battery comprising the negative electrode plate, a battery module, a battery pack, and a power consuming device. The composite lithium metal negative electrode plate of the present application comprises a current collector and an active substance layer coated on at least one surface of the current collector, wherein the active substance layer comprises an active substance and a lithiophilic material having a core-shell structure, and the core of the lithiophilic material contains a lithiophilic substance and the shell thereof is a carbon material.

*FIG. 2*

**Description**

**Technical Field**

The present application relates to the technical field of secondary batteries, and in particular to a composite lithium metal negative electrode plate for a secondary battery, a method for preparing the negative electrode plate, as well as a secondary battery comprising the negative electrode plate, a battery module, a battery pack, and a power consuming device.

**Background Art**

In recent years, with an increasingly wide application range of lithium ion batteries, the lithium ion batteries are widely used in energy storage power systems such as hydroelectric, thermal, wind and solar power stations, as well as power tools, electric bicycles, electric motorcycles, electric vehicles, military equipment, aerospace and other fields. Due to the great development of lithium ion batteries, higher requirements have also been placed on the lithium ion batteries in terms of energy density, cycling performance, safety performance, etc.

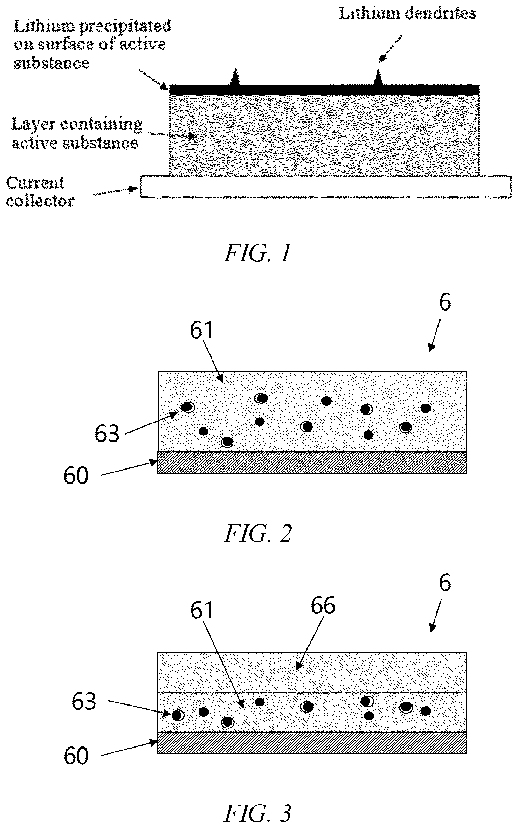

Graphite is commonly used as an active substance of a negative electrode plate for a lithium-ion secondary battery in the prior art. However, during the charging process of the lithium-ion secondary battery in the prior art, lithium dendrites are formed due to the deposition of lithium ions on the electrode plate during reduction, (as shown in Fig. 1). The growth of lithium dendrites results in the expansion of a battery, giving rise to an unstable interface between the electrode and the electrolyte solution during the cycling of the battery, poor electrolyte infiltration, damages to the formed solid electrolyte interphase (SEI) film, and a reduced service life of the battery. The lithium dendrites may even pierce the separator, leading to the internal short circuit of a lithium ion battery and resulting in combustion and explosion caused by the thermal runaway of the battery.

Therefore, there is a need to develop a negative electrode plate, which has an improved electrode configuration, controlled deposition of lithium ions, and inhibition of the growth the lithium dendrites, thereby improving the service life and safety performance of a lithium ion battery.

**Summary of the Invention**

In view of the problems existing in the prior art, an object of the present application is to provide a composite lithium metal negative electrode plate, which can improve the service life and safety performance of a lithium ion battery using the negative electrode plate, while ensuring the rate performance of the battery and reducing the capacity attenuation of the battery.

In order to achieve the above object, in one aspect, the present application provides a composite lithium metal negative electrode plate comprising a current collector and an active substance layer coated on at least one surface of the current collector, characterized in that
the active substance layer comprises:

an active substance;
and a lithiophilic material having a core-shell structure; and
the core of the lithiophilic material contains a lithiophilic substance, and the shell thereof is a carbon material.

Thus, adding a lithiophilic material having a core-shell structure on the surface of a negative electrode plate can reduce the nucleation barrier of lithium and directionally induce the deposition of lithium metal on the lithiophilic substance inside the carbon shell. Controlling the position (inside the carbon shell) of lithium deposition and limiting the space for lithium deposition greatly inhibit the growth of lithium dendrites and reduce the expansion of lithium metal during the cycle process. This achieves an extremely high energy density while improving the safety performance and cycling performance of a battery.

In any embodiment, the mass percentage content of the lithiophilic material in the active substance layer is 0.1% - 5%, optionally 0.3% - 3%.

Thus, controlling the proportion of the lithiophilic substance in the active substance layer not only can ensure that the energy density of the negative electrode plate does not decrease, but also ensure that there are enough lithiophilic substances to induce and control lithium deposition.

In any embodiment, the lithiophilic substance is one or more of metal elementary substances, i.e., Si, Ni, Ga, Sn, In, Ge, Ti, Mo, Pt, Al, Mg, Zn, Ag, Au, Co, Fe, etc., and/or one or more of oxides, sulfides, fluorides, nitrides, chlorides, and carbides comprising the above metal elements.

Thus, the selection of a metal with good lithiophilicity and/or an oxide, sulfide, fluoride, nitride, chloride, and carbide thereof as a lithiophilic substance can effectively induce the deposition of lithium ions on the surface, which prevent lithium ions from forming lithium dendrites at any position on the surface of the negative electrode, thus preventing the lithium dendrites from piercing the separator to cause local short circuit and thus reduce the safety performance of a battery.

In any embodiment, the carbon material shell of the lithiophilic material has a thickness of 1 0-70 nm.

When the thickness of the carbon material shell is too small, the carbon shell is prone to breakage during the cold pressing process of the carbon material; and when the thickness is too large, the diffusion of lithium ions in and outside the carbon material shell is affected, and the lithiophilic substance inside the shell is difficult to exert its lithiophilicity effect.

In any embodiment, the carbon material shell of the lithiophilic material has a cavity therein.

Thus, using the cavity inside the carbon material shell to limit a space for lithium deposition avoids the disordered growth of lithium dendrites on the surface of the negative electrode and also alleviates the expansion problem caused by the lithium metal during the cycle process.

In any embodiment, the cavity of the lithiophilic material further contains a lithium metal therein.

Thus, by means of the induction and limited area effects of the lithiophilic substance in the lithiophilic material having a cavity, lithium ions are reduced during the charge/discharge process and deposited and precipitated inside the cavity of the lithiophilic material.

In any embodiment, the active substance is selected from one or more of a carbon-based material, a silicon-based material, and a metal oxide.

Thus, the selection of the substances as described above as an active substance of a negative electrode plate not only ensures that the negative electrode plate has good lithium-ion intercalation and de-intercalation performance and a higher theoretical capacity, but also forms a stable solid electrolyte interphase film (SEI film) on the electrode interface to improve the stability of the negative electrode plate.

In any embodiment, the carbon-based material is one or more of natural graphite, synthetic graphite, mesophase micro carbon spheres, hard carbon and soft carbon; and/or

the silicon-based material is one or two of silicon carbon, and silicon oxide; and/or
the metal oxide is one or more of iron oxide, and tin oxide.

Thus, the selection of the substances as described above as an active substance of a negative electrode active substance can ensure that the performance of the negative electrode plate meets the requirements.

In any embodiment, a second active substance layer free of a lithiophilic material is further provided outside the active substance layer.

Thus, adding a second active substance layer free of a lithiophilic material outside the active substance layer is beneficial for the deposition of lithium metal in the direction towards the current collector and reduces the lithium dendrites on the surface of the electrode plate.

In a second aspect, the present application provides a composite lithium metal negative electrode plate comprising a current collector and an active substance layer, characterized by

further comprising a lithiophilic material layer between the current collector and the active substance layer, wherein the lithiophilic material layer comprises a lithiophilic material having a core-shell structure; and
the core of the lithiophilic material contains a lithiophilic substance, and the shell thereof is a carbon material.

Thus, adding a lithiophilic material having a core-shell structure between the current collector and the active substance layer can reduce the nucleation barrier of lithium and directionally induce the deposition of the lithium metal on the lithiophilic substance inside the carbon shell, enabling the deposited lithium metal closer to the current collector. Controlling the position (inside the carbon shell) of lithium deposition and limiting the space for lithium deposition greatly inhibit the growth of lithium dendrites and reduce the expansion of lithium metal during the cycle process. This achieves an extremely high energy density while improving the safety performance and cycling performance of a battery.

In any embodiment, the ratio of the thickness of the lithiophilic material layer to the active substance layer is 0.1/100 - 6/100, preferably 0.3/100 - 5/100.

Thus, controlling the ratio of the thickness of the lithiophilic material layer to the active substance layer not only can ensure that the energy density of the negative electrode plate does not decrease, but also ensure that there are enough lithiophilic substances to induce and control the lithium deposition.

In any embodiment, the lithiophilic substance is one or more of metal elementary substances, i.e., Si, Ni, Ga, Sn, In, Ge, Ti, Mo, Pt, Al, Mg, Zn, Ag, Au, Co, Fe, etc., and/or one or more of oxides, sulfides, fluorides, nitrides, chlorides, and carbides comprising the above metal elements.

Thus, the selection of a metal with good lithiophilicity and/or an oxide, sulfide, fluoride, nitride, chloride, and carbide thereof as a lithiophilic substance can effectively induce the deposition of lithium ions on the surface, which prevent lithium ions from forming lithium dendrites at any position on the surface of the negative electrode, thus preventing the lithium dendrites from piercing the separator to cause local short circuit and thus reduce the safety performance of a battery.

In any embodiment, the carbon material shell of the lithiophilic material has a thickness of 10-70 nm.

When the thickness of the carbon material shell is too small, the carbon shell is prone to breakage during the cold pressing process of the carbon material; and when the thickness is too large, the diffusion of lithium ions in and outside the carbon material shell is affected, and the lithiophilic substance inside the shell is difficult to exert its lithiophilicity effect. In any embodiment, the carbon material shell of the lithiophilic material has a cavity therein.

Thus, using the cavity inside the carbon material shell to limit a space for lithium deposition avoids the disordered growth of lithium dendrites on the surface of the negative electrode and also alleviates the expansion problem caused by the lithium metal during the cycle process.

In any embodiment, the cavity of the lithiophilic material further contains a lithium metal therein.

Thus, by means of the induction and limited area effects of the lithiophilic substance in the lithiophilic material having a cavity, lithium ions are reduced during the charge/discharge process and deposited and precipitated inside the cavity of the lithiophilic material.

In a third aspect, the present application provides a preparation method for a composite lithium metal negative electrode plate, comprising:

> S1 - 1: mixing an active substance and a lithiophilic material at a predetermined ratio in a dispersion medium to prepare a slurry A; and
> S1 - 2: coating the slurry A obtained in step S1 - 1 onto at least one surface of a current collector.

Thus, by means of the preparation method including the processes as described above, a negative electrode plate having a higher energy density and a better safety performance during cycling as described above can be obtained.

In some embodiments, the preparation method further comprises:

> S1 - 3: dispersing an active substance into a dispersion medium to prepare a slurry B; and
> S1 - 4: coating the slurry B obtained in step S1 - 3 onto the negative electrode plate obtained in step S1 - 2.

Thus, the negative electrode plate obtained by means of the preparation method as described above allows the lithium metal more likely to deposit in the direction towards the current collector and thus reduces the lithium dendrites on the surface of the electrode plate.

In a fourth aspect, the present application provides a preparation method for a composite lithium metal negative electrode plate, comprising:

> S2 - 1: dispersing a lithiophilic material into a dispersion medium to prepare a slurry C;
> S2 - 2: dispersing an active substance into a dispersion medium to prepare a slurry D;
> S2 - 3: coating the slurry C obtained in step S2 - 1 onto at least one surface of a current collector to form a lithiophilic material coating; and
> S2 - 4: coating the slurry D obtained in step S2 - 2 onto the surface of the lithiophilic material coating obtained in step S2 - 3.

Thus, the negative electrode plate obtained by means of the preparation method as described above has a higher energy density and a better safety performance and cycling performance.

In a fifth aspect, the present application provides a secondary battery, comprising:
a composite lithium metal negative electrode plate of the first aspect or the second aspect of the present application or a composite lithium metal negative electrode plate prepared by means of the preparation method of the third aspect or the fourth aspect of the present application, and a positive electrode plate, an electrolyte solution and a separator.

As stated above, the secondary battery of the present application has improved service life and safety performance, and the mass energy density thereof is also fully ensured.

In any embodiment, where N represents the lithium intercalation capacity of the negative electrode and P represents the delithiation capacity of the positive electrode, the ratio of the lithium capacity of the negative electrode plate to the positive electrode plate is N/P < 1, optionally $0.3 \leq N/P \leq 0.9$. Thus, it is beneficial for further improving the mass energy density of a secondary battery.

In a sixth aspect, the present application provides a battery module comprising a secondary battery of the fifth aspect of the present application.

In a seventh aspect, the present application provides a battery pack including a battery module of the sixth aspect of the present application.

In an eighth aspect, the present application provides a power consuming device, including a secondary battery of the fifth aspect of the present application, a battery module of the sixth aspect of the present application, and a battery pack in the seventh aspect of the present application.

For the negative electrode plate of the present application, a core-shell lithiophilic material having a lithiophilic substance therein is added on the negative electrode plate, such that the nucleation barrier of lithium can be effectively reduced and the lithium metal is directionally induced to deposit on the lithiophilic substance inside the shell, thus improving the service life and safety performance of the lithium ion battery and fully ensuring the mass energy density of the battery.

Brief Description of the Drawings

Fig. 1 shows an exemplary schematic diagram of a negative electrode plate with an active substance layer on a surface of a current collector in an embodiment of the prior art.
Fig. 2 shows an exemplary schematic diagram of a negative electrode plate with an active substance layer on a surface of a current collector in an embodiment of the present application.
Fig. 3 shows an exemplary schematic diagram of a negative electrode plate with an active substance layer and a second active substance layer on a surface of a current collector in an embodiment of the present application.
Fig. 4 shows an exemplary schematic diagram of a negative electrode plate with an active substance layer and a lithiophilic material layer on a surface of a current collector in an embodiment of the present application.
Fig. 5 shows a schematic structural diagram of a lithiophilic material in an embodiment of the present application.
Fig. 6 shows a schematic diagram of a secondary battery in an embodiment of the present application.
Fig. 7 shows an exploded view of the secondary battery in the embodiment of the present application as shown in Fig. 6.
Fig. 8 shows a schematic diagram of a battery module in an embodiment of the present application.
Fig. 9 shows a schematic diagram of a battery pack in an embodiment of the present application.
Fig. 10 shows an exploded view of the battery pack in the embodiment of the present application shown in Fig. 9.
Fig. 11 shows a schematic diagram of a power consuming device using a secondary battery in an embodiment of the present application as a power source.

List of reference numerals:

1 - battery pack; 2 - upper box body; 3 - lower box body; 4 - battery module; 5 - secondary battery; 51 - housing; 52 - electrode assembly; 53 - top cover assembly; 6 - negative electrode plate; 60 - current collector; 61 - active substance layer; 62 - lithiophilic material layer; 63 - lithiophilic material; 64 - carbon shell; 65 - lithiophilic substance; 66 - second active substance layer; 67 - lithium metal deposition; 68 - cavity;

Detailed Description of Embodiments

Hereafter, embodiments of a negative electrode plate for a secondary battery and a preparation method therefor, a secondary battery, a battery module, a battery pack, and a power consuming device of the present application are specifically disclosed in the detailed description with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer $\geq 2$, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All technical features and optional technical features of the present application can be combined with one another to form a new technical solution, unless otherwise stated.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

The charge/discharge process of a lithium ion battery in the prior art is a redox of lithium ions on the positive and negative electrode plates, which essentially involves the intercalation and de-intercalation of lithium ions on the positive and negative electrode plates. Therefore, the requirements for the negative electrode include: it should exhibit an appropriate potential for lithium, be not prone to structural change during the redox process, have a negative electrode active substance that has a relatively small volume change during the lithium ion intercalation and de-intercalation processes, and have a stable structure and good cycling performance. It should have a high capacity, such that the battery has a better energy density. However, due to the irreversible deposition of lithium ions on the negative electrode surface, lithium dendrites are formed, which lowers the content of effective lithium ions and reduces the first efficiency of the battery. Moreover, lithium dendrites are prone to pierce the separator, causing short circuits and reducing the safety performance of battery during use.

Therefore, there is an urgent need for a new structure of a negative electrode plate, which can ensure the structural stability of the negative electrode plate during the charge/discharge process, while also ensuring the rate performance of the battery and reducing the capacity attenuation of the battery.

In an embodiment of the present application, the present application provides a composite lithium metal negative electrode plate comprising a current collector and an active substance layer coated on at least one surface of the current collector, wherein the active substance layer comprises:

an active substance;
and a lithiophilic material having a core-shell structure; and
the core of the lithiophilic material contains a lithiophilic substance, and the shell thereof is a carbon material.

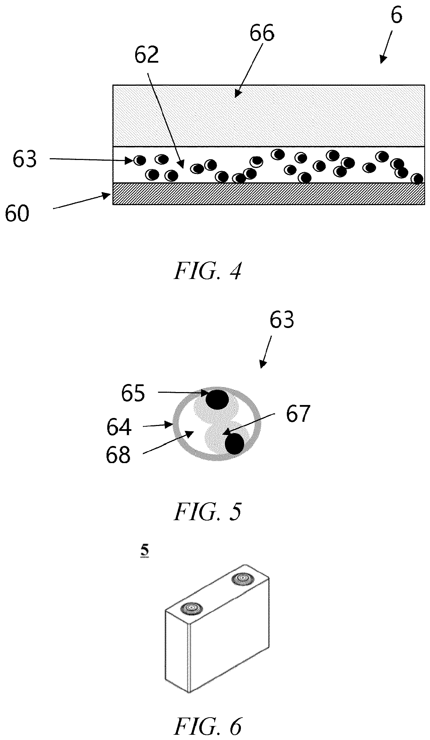

Although the mechanism is not yet clear, the applicant has discovered by a lot of experiments that: as shown in Fig. 2, in the present application, a lithiophilic material (63) is provided in an active substance layer (61), which can reduce the nucleation barrier of lithium and directionally induce the deposition of lithium metal on the lithiophilic substance (65) inside the carbon shell (64), allowing the deposited lithium metal closer to the current collector. Controlling the position (inside the carbon shell) of lithium deposition and limiting the space for lithium deposition greatly inhibit the growth of lithium dendrites and reduce the expansion of lithium metal during the cycle process (as shown in Fig. 5). Thus, an extremely high energy density is achieved while the safety performance and cycling performance of a battery are improved. Therefore, providing a lithiophilic material (63) in an active substance layer (61) can reduce the generation of irregular lithium dendrites on the surface of a negative electrode plate. Moreover, the existed lithiophilic material (63) induces lithium to uniformly disperse and deposit on the negative electrode plate in the form of lithium metal, such that the energy density of the negative electrode plate is improved and the irreversible deposition caused by a high local lithium metal concentration is avoided, which can improve the cycling performance and service life of the battery, reduce the specific capacity attenuation caused by cycling, and enable the battery to have characteristics of very good resistance to overcharge and over-discharge. In addition, the decrease in lithium dendrites reduces the damage to the separator and avoids the short circuit of electrodes, thereby improving the safety performance of the battery.

The active substance layer may comprise an active substance, a lithiophilic material, a conductive agent, a binder, and an optional thickening agent. In the present application, the lithiophilic substance in the lithiophilic material may be any one as long as it has an effect of reducing the nucleation barrier of lithium and directionally inducing lithium deposition as described above, and the type of the lithiophilic substance is not particularly limited. Optionally, the lithiophilic substance may be of various forms of a lithiophilic metal, such as an elementary substance, an oxide, and a sulfide thereof. The type of the conductive agent, the binder and the optional thickening agent is not limited specifically and can be selected by those skilled in the art according to actual requirements. The contents of the active substance, lithiophilic material, conductive agent, binder and optional thickening agent are not limited specifically and can be selected by those skilled in the art according to actual requirements.

In some embodiments, the mass percentage content of the lithiophilic material in the active substance layer is 0.1% - 5%, preferably 0.3% - 3%. It is known that the main function of the lithiophilic substance in the lithiophilic material is to induce lithium to deposit on the surface. When the content of the lithiophilic material is too low, sufficient lithium deposition sites cannot be formed, and there is still a large amount of lithium deposited on the surface of the active substance to form lithium dendrites; and when the content of the lithiophilic material is too high, lithium ions are likely to react with the lithiophilic substance and are less prone to de-intercalation, which easily results in the loss of lithium ions, thus reducing the energy density of the battery. Therefore, controlling the proportion of the lithiophilic material in the active substance layer not only can ensure that the energy density of the negative electrode plate does not decrease, but also ensure that there are enough lithiophilic substances to induce and control lithium deposition.

In some embodiments, the lithiophilic substance is one or more of metal elementary substances, i.e., Si, Ni, Ga, Sn, In, Ge, Ti, Mo, Pt, Al, Mg, Zn, Ag, Au, Co, Fe, etc., and/or one or more of oxides, sulfides, fluorides, nitrides, chlorides, and carbides comprising the above metal elements. The lithiophilic property refers to the lithiophilicity specified in the lithiophilicity test method described later.

A metal elementary substance having a lithiophilic property and/or an oxide, sulfide, fluoride, nitride, chloride, and carbide thereof can effectively induce the deposition of lithium ions on the surface thereof, which prevent lithium ions from forming lithium dendrites at any position on the surface of the negative electrode, thus preventing the lithium dendrites from piercing the separator to cause local short circuit and thus reduce the safety performance of a battery.

In some embodiments, the carbon material shell of the lithiophilic material has a thickness of 10-70 nm. By means of such thickness, both the ionic transport efficiency and an ideally appropriate strength are balanced, thus preventing the metal particulates generated in the carbon shell from leaking outside the carbon shell. When the shell layer of the carbon material is too thin, the carbon shell has poor stability and is prone to structural collapse during the production of the electrode plate and the use of the electrode, or the deposited lithium will break/pierce the carbon shell, destroying the directional deposition of lithium inside the shell layer structure. When the carbon shell is too thick, the transport paths for ions become longer and the ionic transport efficiency is reduced, which significantly reduce the rate performance of the battery.

In some embodiments, the carbon material shell of the lithiophilic material has a cavity therein. The shell-layer structure defines a certain space for lithium deposition, and the formed cavity not only provides a good growth space for lithium deposition, but also can have the function of limiting the growth of lithium metal within a specified area, such that the disordered growth of lithium dendrites on the surface of the negative electrode is avoided while the expansion problem caused by the lithium metal during the cycle process is alleviated, thus improving the use safety of a lithium ion battery.

In some embodiments, the cavity of the lithiophilic material further contains a lithium metal therein. The lithium metal may be sourced from the deposition of lithium ions on the surface of a lithiophilic substance when in contact with an electrolyte solution. The induction effect of the lithiophilic substance and the limited area effect of the cavity are not affected whether there is lithium metal in the cavity of the lithiophilic material or not. In general, under the induction of the lithiophilic substance in the shell-layer structure, the lithium ions in the electrolyte solution are deposited in the form of a lithium metal, and there is a dynamic conversion reaction equilibrium between the lithium metal and the lithium ions. In addition, the specific capacity of the active substance is insufficient to accommodate the intercalation and de-intercalation of enough lithium ions. Therefore, a certain amount of lithium metal may always exist in the cavity. It is known that the theoretical gram capacity of lithium metal is extremely high, and the presence of the lithium metal significantly improves the energy density of the lithium ion battery.

During a charging process, lithium ions exceeding the capacity of active substances are deposited and precipitated inside the cavity of the lithiophilic material in the form of a lithium metal, and during the discharging process, the lithium ions converted from the precipitated lithium metal return to the electrolyte solution preceding the lithium ions accommodated in the active substances.

In some embodiments, the active substance is selected from one or more of a carbon-based material, a silicon-based material, and a metal oxide. All these materials are known to be common negative electrode plate materials, which have various advantages, such as appropriate potentials for lithium, high structural stability, less deformation during the cycling process of lithium ion intercalation and de-intercalation, a high energy density, and easy formation of stable SEI films on the surface, and therefore are typically selected as an active substance of a negative electrode. The selection of the above-mentioned materials as a negative electrode active substance can ensure that the formed negative electrode and the corresponding secondary battery are more likely to form a composite lithium metal negative electrode structure, and the negative electrode plate has higher stability.

In some embodiments, the carbon-based material is one or more of natural graphite, synthetic graphite, mesophase micro carbon spheres, hard carbon and soft carbon; and/or

the silicon-based material is one or two of silicon carbon, and silicon oxide; and/or
the metal oxide is one or more of iron oxide, and tin oxide.

Thus, the selection of the substances as described above as an active substance of a negative electrode active substance can ensure that the performance of the negative electrode plate meets the requirements.

In some embodiments, a second active substance layer free of a lithiophilic material (sometimes also referred to as a "single active substance layer") is further provided outside the active substance layer. In order to induce lithium to deposit at a place closer to the current collector and reduce the possibility of its deposition at any position on the surface of the active substance layer, the active substance layer containing a lithiophilic material is provided at a position closer to the current collector, which can guide the directional deposition of lithium and reduce the disorder of lithium deposition.

In a second aspect, the present application provides a composite lithium metal negative electrode plate comprising a current collector and an active substance layer, characterized by

further comprising a lithiophilic material layer between the current collector and the active substance layer, wherein the lithiophilic material layer comprises a lithiophilic material having a core-shell structure; and
the core of the lithiophilic material contains a lithiophilic substance, and the shell thereof is a carbon material.

Thus, adding a lithiophilic material having a core-shell structure between the current collector and the active substance layer can reduce the nucleation barrier of lithium and directionally induce the deposition of the lithium metal on the lithiophilic substance inside the carbon shell, enabling the deposited lithium metal closer to the current collector. Controlling the position (inside the carbon shell) of lithium deposition and limiting the space for lithium deposition greatly inhibit the growth of lithium dendrites and reduce the expansion of lithium metal during the cycle process. This achieves an extremely high energy density while improving the safety performance and cycling performance of a battery.

The active substance layer may comprise an ordinary active substance, a conductive agent, a binder, and an optional thickening agent. The ordinary active substance is a commercially available product free of a lithiophilic material. The type of the conductive agent, the binder and the optional thickening agent is not limited specifically and can be selected by those skilled in the art according to actual requirements. The contents of the active substance, conductive agent, binder and optional thickening agent are not limited specifically and can be selected by those skilled in the art according to actual requirements. Optionally, relative to the total weight of the active substance layer, the amount of the active substance may be 93.0-98.0 wt%; the amount of the conductive agent may be 0.3-4.0 wt%; the amount of the binder may be 0.3-2.0 wt%; and the amount of the optional thickening agent may be 0.1-1.0 wt%.

In some embodiments, the ratio of the thickness of the lithiophilic material layer to the active substance layer is 0.1/100 - 6/100, preferably 0.3/100 - 5/100. When the lithiophilic material layer and the active substance layer are composed of different substances, controlling the thickness ratio of the lithiophilic material layer to the active substance layer can control the proportion of the amount of the lithiophilic material to the active substance on the current collector, which not only can ensure that the energy density of the negative electrode plate does not decrease, but also ensure that there are enough lithiophilic substances to induce and control lithium deposition.

In some embodiments, the lithiophilic substance is one or more of metal elementary substances, i.e., Si, Ni, Ga, Sn, In, Ge, Ti, Mo, Pt, Al, Mg, Zn, Ag, Au, Co, Fe, etc., and/or one or more of oxides, sulfides, fluorides, nitrides, chlorides, and carbides comprising the above metal elements.

Thus, the selection of a metal with good lithiophilicity and/or an oxide, sulfide, fluoride, nitride, chloride, and carbide thereof as a lithiophilic substance can effectively induce the deposition of lithium ions on the surface, which prevent lithium ions from forming lithium dendrites at any position on the surface of the negative electrode, thus preventing the lithium dendrites from piercing the separator to cause local short circuit and thus reduce the safety performance of a battery.

In some embodiments, the carbon material shell of the lithiophilic material has a thickness of 10-70 nm. By means of such thickness, both the ionic transport efficiency and an ideally appropriate strength are balanced, thus preventing the metal particulates generated in the carbon shell from leaking outside the carbon shell. When the shell layer of the lithiophilic material is too thin, the carbon shell has poor stability and is prone to structural collapse during the production of the electrode plate and the use of the electrode, or the deposited lithium will break/pierce the carbon shell, destroying the directional deposition of lithium inside the shell layer structure. Moreover, when the carbon shell structure is broken, the metal deposited inside the carbon shell will be released, causing a risk of not being able to induce the directional deposition of lithium metal. When the carbon shell is too thick, the transport paths for ions become longer and the ionic transport efficiency is reduced, which significantly reduce the rate performance of the battery.

In some embodiments, the carbon material shell of the lithiophilic material has a cavity therein. As stated above, the shell-layer structure defines a certain space for lithium deposition, and the formed cavity not only provides a good growth space for lithium deposition, but also can have an function of limiting the growth of the lithium metal within a specified area, such that the disordered growth of lithium dendrites on the surface of the negative electrode is avoided while the expansion problem caused by the lithium metal during the cycle process is alleviated, thus improving the use safety of a lithium ion battery.

In some embodiments, the cavity of the lithiophilic material further contains a lithium metal therein. The lithium metal may be sourced from the deposition of lithium ions on the surface of a lithiophilic substance when in contact with an electrolyte solution. The induction effect of the lithiophilic substance and the limited area effect of the cavity are not affected whether there is lithium metal in the cavity of the lithiophilic material or not. In general, under the induction of the lithiophilic substance in the shell-layer structure, the lithium ions in the electrolyte solution are deposited in the form of a lithium metal, and there is a dynamic conversion reaction equilibrium between the lithium metal and the lithium ions. In addition, the specific capacity of the active substance is insufficient to accommodate the intercalation and de-intercalation of enough lithium ions. Therefore, a certain amount of lithium metal may always exist in the cavity. It is known that the theoretical gram capacity of lithium metal is extremely high, and the presence of the lithium metal significantly improves the energy density of the lithium ion battery.

During a charging process, lithium ions exceeding the capacity of active substances are deposited and precipitated inside the cavity of the lithiophilic material in the form of a lithium metal, and during the discharging process, the lithium ions converted from the precipitated lithium metal return to the electrolyte solution preceding the lithium ions accommodated in the active substances.

The present application further provides a preparation method for a composite lithium metal negative electrode plate, comprising:

S1 - 1: mixing an active substance and a lithiophilic material at a predetermined ratio in a dispersion medium to prepare a slurry A; and

S1 - 2: coating the slurry A obtained in step S1 - 1 onto at least one surface of a current collector.

Thus, by means of the preparation method including the processes as described above, a negative electrode plate having a higher energy density and a better safety performance during cycling as described above can be obtained.

In some embodiments, the preparation method further comprises:

S1 - 3: dispersing an active substance into a dispersion medium to prepare a slurry B; and

S1 - 4: coating the slurry B obtained in step S1 - 3 onto the negative electrode plate obtained in step S1 - 2.

Thus, the negative electrode plate obtained by means of the preparation method as described above allows the lithium metal more likely to deposit in the direction towards the current collector and thus reduces the lithium dendrites on the surface of the electrode plate.

In a fourth aspect, the present application provides a preparation method for a composite lithium metal negative electrode plate, comprising:

S2 - 1: dispersing a lithiophilic material into a dispersion medium to prepare a slurry C;

S2 - 2: dispersing an active substance into a dispersion medium to prepare a slurry D;

S2 - 3: coating the slurry C obtained in step S2 - 1 onto at least one surface of a current collector to form a lithiophilic material coating; and

S2 - 4: coating the slurry D obtained in step S2 - 2 onto the surface of the lithiophilic material coating obtained in step S2 - 3.

Thus, the negative electrode plate obtained by means of the preparation method as described above has a higher energy density and a better safety performance and cycling performance.

The present application further provides a secondary battery, comprising the negative electrode plate of the present application as described above, and further comprising a positive electrode plate, an electrolyte solution and a separator.

In the secondary battery of the present application, where N represents the lithium intercalation capacity of the negative electrode and P represents the delithiation capacity of the positive electrode, the ratio of the lithium capacity of the negative electrode plate to the positive electrode plate is N/P < 1, preferably $0.3 \leq N/P \leq 0.9$.

Thus, controlling the ratio of the capacity of the active substances to be N/P < 1 can effectively increase the content of lithium that can be accommodated by the negative electrode plate per unit weight, which is beneficial for improving the overall energy density of the battery. From the perspective of better improving the overall energy density of the battery, preferably, N/P ≤ 0.9. From the perspective of preventing the formation of dendrites and the loss of lithium ions, preferably, 0.3 ≤ N/P.

Herein, the "lithium intercalation capacity of the negative electrode" means the amount of lithium ions that theoretically can be intercalated into the negative electrode active substance when a battery is fully charged, excluding the lithium metal precipitated on the surface of the negative electrode active substance and the lithium precipitated inside the lithiophilic material in the form of a lithium metal under the induction of a lithiophilic substance. The "delithiation capacity of the positive electrode" means the amount of lithium that theoretically can be de-intercalated from the positive electrode when the battery is fully charged. The "lithium intercalation capacity of the negative electrode" and the "delithiation capacity of the positive electrode" can be calculated from the amounts of the positive electrode active substance and the negative electrode active substance that are used.

When the ratio of the lithium capacity of the negative electrode plate to the positive electrode plate, i.e., N/P is 1, all the lithium de-intercalated from the positive electrode active substance just can be intercalated into the negative electrode active substance theoretically. However, some lithium actually is precipitated on the surface of the active substance. Therefore, in the prior art, in order to make more use of the capacity of the negative electrode active substance, N/P is typically greater than 1.

In the present invention, lithium is inducted to deposited inside the lithiophilic material in a metal form, such that no matter what value of N/P is, the precipitation of dendrites can be well avoided. However, the effect of the present invention is significantly obvious when N/P < 1.

In addition, it should be noted that even if N/P < 1, the lithium metal may be precipitated on the surface of the negative electrode active substance, but the precipitated reason metal mainly exists inside the lithiophilic material before the cavity inside the lithiophilic material is fully filled. Even if N/P > 1, the lithiophilic material may have lithium metal precipitated, rather completely intercalated into the negative electrode active substance.

The present application further provides a battery module comprising a secondary battery of the present application as described above.

The present application further provides a battery pack, including a battery module of the present application as described above.

The present application further provides a power consuming device comprising a secondary battery of the present application as described above, a battery module of the present application as described above, or a battery pack of the present application as described above.

For the negative electrode plate of the present application, a core-shell lithiophilic material having a lithiophilic substance having therein is added on the negative electrode plate, such that the nucleation barrier of lithium can be effectively reduced and the lithium metal is directionally induced to deposit on the lithiophilic substance inside the shell, thus improving the service life and safety performance of the lithium ion battery and fully ensuring the mass energy density of the battery.

The method for synthesizing the lithiophilic material having a carbon shell structure is not particularly limited, and by way of example, after the lithiophilic substance is coated with a carbon source, the carbon source is carbonized by means of an arc discharge method, a hydrothermal method, chemical vapor deposition, high-temperature pyrolysis, etc.

As the carbon source described above, water soluble carbon sources, such as glucose and yellow dextrin, may be used.

Preferably, a carbon source and a lithiophilic substance are synthesized into a lithiophilic material by means of a one-step hydrothermal method under the action of a surfactant (e.g., sodium dodecyl sulphonate). In this case, the size of the lithiophilic material can be adjusted and controlled by adjusting the amount of the surfactant. Alternatively, a metal-organic framework compound (MOF) may also directly be carbonized.

The carbonation reaction may be performed by means of heating at 160-180°C for 1-3 hours.

MOF is a coordinated polymer formed by the self-assembling of a polydentate organic ligand containing oxygen, nitrogen, etc., with transition metal ions. It has the characteristics of porosity, large specific surface area, etc. The MOF used in the present invention is not particularly limited, examples may be made of the MOF synthesized by means of a solvent method, a liquid phase diffusion method, a sol-gel method, a stirring synthesis method, a solid-phase synthesis method, microwave, an ultrasonic wave, ionothermal, etc.

The polydentate organic ligand is not particularly limited, and conventional substances used as a polydentate organic ligand may be used, as long as they can be carbonized. For example, a polyol, a polyacid, or a polyamine, and the mixture thereof may be used.

The transition metal ions may be used without limitation within the scope of not affecting the effectiveness of the present invention and contain a lithiophilic substance.

The carbon shell formed from an organic polymer has the characteristics of simple manufacturing and low costs, which is beneficial for the cost reduction of the battery. The carbon shell formed from a MOF has the characteristics of good lithium ion permeability and high mechanical strength, which is beneficial for improving the charging and discharging speed of the battery and maintaining the carbon shell structure of the lithiophilic material, and is conducive to uniformly inducing the deposition of lithium due to the uniform inclusion of transition metals.

The secondary battery, battery module, battery pack, and power consuming device of the present application will be described below by appropriately referring to the accompanying drawings.

In an embodiment of the present application, provided is a secondary battery.

Typically, a secondary battery comprises a positive electrode plate, a negative electrode plate, an electrolyte and a separator. During the charge/discharge of the battery, active ions are intercalated and de-intercalated back and forth between a positive electrode plate and a negative electrode plate. The electrolyte functions to conduct ions between the positive electrode plate and the negative electrode plate. The separator is provided between the positive electrode plate and the negative electrode plate, and mainly prevents the positive and negative electrodes from short-circuiting and enables ions to pass through.

[Positive electrode plate]

The positive electrode plate may comprise a positive electrode current collector and a positive electrode active substance layer provided on at least one surface of the positive electrode current collector. As an example, the positive electrode current collector has two surfaces opposite in its own thickness direction, and the positive electrode active substance layer is provided on either or both of the two opposite surfaces of the positive electrode current collector.

The positive electrode current collector may be a metal foil or a composite current collector. For example, as a metal foil, an aluminum foil may be used. The composite current collector may include a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

The positive electrode active substance layer comprises a positive electrode active substance. The positive electrode active substance includes, but is not limited to, lithium cobaltate, lithium nickel manganese cobaltate, lithium nickel manganese aluminate, lithium iron phosphate, lithium vanadium phosphate, lithium cobalt phosphate, lithium manganese phosphate, lithium iron silicate, lithium vanadium silicate, lithium cobalt silicate, lithium manganese silicate, spinel-type lithium manganate, spinel-type lithium nickel manganate, lithium titanate, etc. One or more of these materials may be used as the positive electrode active substance.

The positive electrode active substance layer further optionally comprises a binder. However, the type of the binder is not particularly limited, and a person skilled in the art would have been able to make a choice according to actual requirements. As an example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and a fluorine-containing acrylate resin.

The positive electrode active substance layer further optionally comprises a conductive agent. However, the type of the conductive agent is not limited specifically, and can be selected by those skilled in the art according to actual requirements. As an example, the conductive agent for a positive electrode active substance layer may be selected from one or more of superconductive carbon, acetylene black, carbon black, Ketjen black, carbon dots, carbon nanotubes, graphene, and carbon nanofibers.

The positive electrode plate may be prepared by means of a method known in the art. As an example, a positive electrode active substance, a conductive agent and a binder can be dispersed into a solvent (e.g., N-methylpyrrolidone (NMP)) to form a uniform positive electrode slurry; and the positive electrode slurry is coated onto a positive electrode current collector, and is then subjected to procedures such as drying and cold pressing, so as to obtain the positive electrode plate.

[Negative electrode plate]

The negative electrode plate in the secondary battery of the present application uses the above-mentioned negative electrode plate for a secondary battery, which comprises a current collector and a coating containing a lithiophilic material provided on at least one surface of the current collector. The coating has various structural arrangements. For example, a lithiophilic material containing a lithiophilic substance and a negative electrode active substance are fully mixed and then provided on at least one surface of the current collector to form a single active substance layer; a lithiophilic material containing a lithiophilic substance and a negative electrode active substance are fully mixed and then provided on at least one surface of the current collector to form a first layer of active substance layer, and an active substance free of a lithiophilic substance is provided on the surface of the first layer of active substance layer to form double active substance layers; or only a lithiophilic material containing a lithiophilic substance is provided on at least one surface of the current collector to form a lithiophilic substance layer, and an active substance free of a lithiophilic substance is provided on the surface of the lithiophilic substance layer.

In the case where an active substance layer containing a lithiophilic substance is formed on a surface of the current collector, the current collector and the active substance layer of the negative electrode plate may have a structure as exemplarily shown in Fig. 2, Fig 3, or Fig. 4. In the case where active substance layers are formed on both surfaces of the current collector, the two active substance layers of the negative electrode plate may have a symmetrical structure.

The negative electrode current collector may be a metal foil or a composite current collector. For example, as a metal foil, a copper foil can be used. The composite current collector may include a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

The negative electrode active substance may be a negative electrode active substance well known in the art for batteries. As an example, the negative electrode active substance may include at least one of the following materials: a carbon-based material, such as synthetic graphite, natural graphite, soft carbon, hard carbon, etc., a silicon-based material, a tin-based material, lithium titanate, etc. The silicon-based material may be selected from at least one of elemental silicon, silicon oxides, silicon carbon composites, silicon nitrogen composites, and silicon alloys. The tin-based material may be selected from at least one of elemental tin, tin oxides, and tin alloys. However, the present application is not limited to these materials, and other conventional materials that can be used as negative electrode active substances for batteries can also be used. These negative electrode active substances may be used alone or in combination of two or more.

Both the lithiophilic material layer and the active substance layer (containing or being free of a lithiophilic material) in the negative electrode active substance layer may comprise a binder, a conductive agent, an optional thickening agent, and other auxiliary agents.

The conductive agents respectively used in the active substance layer and the lithiophilic material layer may be the same or different from each other and can be selected by those skilled in the art according to requirements. As an example, the conductive agent may be selected from one or more of superconductive carbon, acetylene black, carbon black, Ketjen black, carbon dots, carbon nanotubes, graphene, and carbon nanofibers.

The binders respectively used in the active substance layer and the lithiophilic material layer may be the same or different from each other and can be selected by those skilled in the art according to requirements. As an example, the binder may be selected from one or more of butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

The other auxiliary agents respectively used in the active substance layer and the lithiophilic material layer may be the same or different from each other and can be selected by those skilled in the art according to requirements. As an example, the auxiliary agent optionally includes a thickening agent, e.g., sodium carboxymethyl cellulose (CMC-Na), etc.

By means of the preparation method of the present application, a lithiophilic material containing a lithiophilic substance and a negative electrode active substance can be fully mixed and then provided on at least one surface of the current collector to form a single active substance layer comprising a lithiophilic material and an active substance; alternatively, a lithiophilic material containing a lithiophilic substance and a negative electrode active substance can be fully mixed and then provided on at least one surface of the current collector to form a first layer of active substance layer, and an active substance free of a lithiophilic material is provided on the surface of the first layer of active substance layer to form a second active substance layer, thus obtaining a composite coating structure; or only a lithiophilic material containing a lithiophilic substance is provided on at least one surface of the current collector to form a lithiophilic material layer, and an active substance free of a lithiophilic substance is provided on the surface of the lithiophilic material layer, thus also obtaining a composite coating structure comprising a lithiophilic material layer and an active substance layer.

As an example, the above-mentioned active substance, lithiophilic material, conductive agent, binder and optional other auxiliary agents are dispersed into a solvent (e.g., deionized water) to form a uniform slurry, and the slurry is coated onto at least one surface of a negative electrode current collector by means of a conventional coating process, followed by drying to obtain a first active substance layer. Optionally, the active substance, conductive agent, binder and optional other auxiliary agents are dispersed into a solvent (e.g., deionized water) to form a uniform slurry, and the slurry is coated onto the surface of the first active substance layer by means of a conventional coating process, followed by drying to obtain a second active substance layer. Next, under cold pressing conditions, the resulting composite coating structure comprising a current collector, a lithiophilic material, and an active substance is cold-pressed to obtain a negative electrode plate.

[Electrolyte]

The electrolyte functions to conduct ions between the positive electrode plate and the negative electrode plate. The type of the electrolyte is not specifically limited in the present application, and can be selected according to actual requirements. For example, the electrolyte may be in a liquid state, a gel state or an all-solid state.

In some embodiments, an electrolyte solution is used as the electrolyte. The electrolyte solution comprises an electrolyte salt and a solvent.

As an example, the electrolyte salt may be selected from one or more of lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bisfluorosulfonimide (LiFSI), lithium bistrifluoromethanesulfonimide (LiTFSI), lithium trifluoromethanesulfonate (LiTFS), lithium difluorooxalate borate (LiDFOB), lithium dioxalate borate (LiBOB), lithium difluorophosphate (LiPO$_2$F$_2$), lithium bisoxalatodifluorophosphate (LiDFOP), and lithium tetrafluorooxalate phosphate (LiTFOP).

As an exampls, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolyte also optionally includes an additive. For example, the electrolyte can include a negative electrode film-forming additive, a positive electrode film-forming additive, an additive to improve the overcharge performance of a battery, an additive to improve the high temperature performance of a battery, and an additive to improve the low temperature performance of a battery, etc.

[Separator]

The separator isolates the positive electrode plate from the negative electrode plate, prevents short-circuiting inside the battery, and also allows active ions to pass through the separator and move between the positive and negative electrodes. In the secondary battery of the present application, the type of the separator is not particularly limited, and any well-known porous-structure separator with good chemical stability and mechanical stability may be selected.

In some embodiments, the material of the separator may be selected from one or more of a glass fiber film, a non-woven film, a polyethylene (PE) film, a polypropylene (PP) film, a polyvinylidene fluoride film, and a multilayer composite film comprising one or two or more of them. The separator may be either a single-layer separator or a multi-layer composite separator and is not limited particularly. When the separator is a multi-layer composite separator, the materials in the respective layers may be same or different, which are not limited particularly.

In some embodiments, an electrode assembly may be formed by a positive electrode plate, a negative electrode plate and a separator by a winding process or a stacking process.

In some embodiments, the secondary battery may include an outer package. The outer package may be used to package the electrode assembly and electrolyte as described above.

In some embodiments, the outer package of the secondary battery can be a hard shell, for example, a hard plastic shell, an aluminum shell, a steel shell, etc. The outer package of the secondary battery may also be a soft bag, such as a pouch-type soft bag. The material of the soft bag may be plastics, and the examples of plastics may include polypropylene (PP), polybutylene terephthalate (PBT), and polybutylene succinate (PBS), etc.

The shape of the secondary battery is not particularly limited in the present application and may be cylindrical, square or of any other shape. For example, Fig. 6 is a square secondary battery 5 as an example.

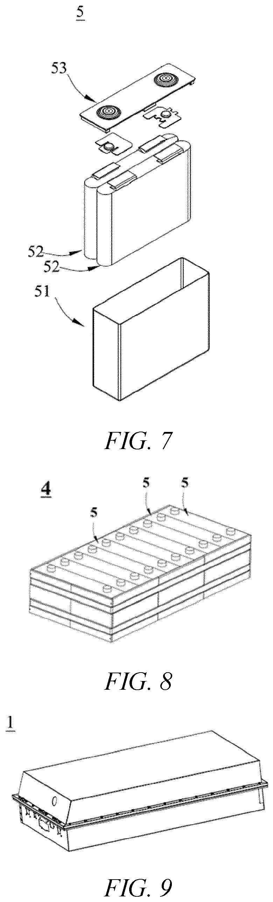

In some embodiments, referring to Fig. 7, the outer package may include a housing 51 and a top cover assembly 53. Herein, the housing 51 may comprise a bottom plate and side plates connected to the bottom plate, and the bottom plate and the side plates enclose to form an accommodating cavity. The housing 51 has an opening in communication with the accommodating cavity, and the top cover assembly 53 can cover the opening to close the accommodating cavity. The positive electrode plate, the negative electrode plate, and the separator may be subjected to a winding process or a laminating process to form an electrode assembly 52. The electrode assembly 52 is packaged in the accommodating cavity. The electrolyte solution infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

FIG. 8 shows a battery module 4 as an example. In the battery module 4, a plurality of secondary batteries 5 may be arranged sequentially along a length direction of the battery module 4. Apparently, the secondary batteries may also be arranged in any other manner. Furthermore, the plurality of secondary batteries 5 may be fixed by fasteners.

Optionally, the battery module 4 may further comprise an outer shell with an accommodating space, and the plurality of secondary batteries 5 are accommodated in the accommodating space.

In some embodiments, the above battery module can also be assembled into a battery pack, and the number of the battery modules contained in the battery pack can be selected by those skilled in the art according to the application and capacity of the battery pack.

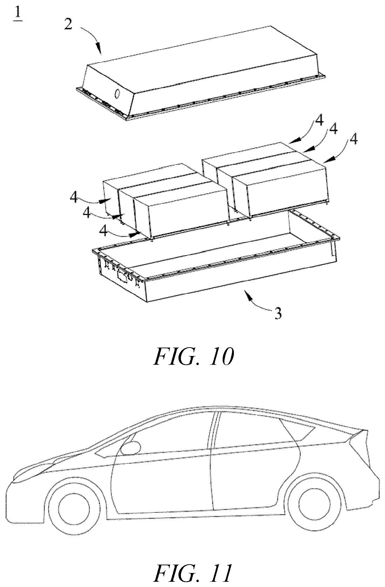

FIG. 9 and FIG. 10 show a battery pack 1 as an example. The battery pack 1 may comprise a battery case and a plurality of battery modules 4 arranged in the battery case. The battery box comprises an upper box body 2 and a lower box body 3, wherein the upper box body 2 may cover the lower box body 3 to form a closed space for accommodating the battery modules 4. A plurality of battery modules 4 may be arranged in the battery box in any manner.

In addition, the present application further provides a power consuming device, including the secondary battery, the battery module, or the battery pack provided in the present application. The secondary battery, the battery module or the battery pack may be used as a power supply or an energy storage unit of the power consuming device. The power consuming device may include, but is not limited to a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship and satellite, an energy storage system, and the like.

As a power consuming device, the secondary battery, battery module or battery pack can be selected according to the usage requirements thereof.

FIG. 11 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the power consuming device may be a mobile phone, a tablet computer, a laptop computer, etc. The power consuming device is generally required to be thin and light, and may have a secondary battery used as a power supply.

**Examples**

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available.

Preparation of lithiophilic material

A lithiophilic substance or a salt thereof used in examples is added into an aqueous solution containing glucose and sodium dodecyl sulphonate, the dispersion solution is fully homogenized, and a lithiophilic material having a complete carbon shell is synthesized by means of a one-step hydrothermal method. In this case, adjusting the amount of glucose enables the carbon shell of the lithiophilic material to reach a desired thickness, and adjusting the amount of sodium dodecyl sulphonate allows the carbon shell of the lithiophilic material to reach a desired size.

In addition, an aqueous solution only containing glucose and sodium dodecyl sulphonate is synthesized into a carbon-shell material free of a lithiophilic substance in the comparative examples by means of a one-step hydrothermal method.

Preparation of negative electrode plate

1. Preparation of a negative electrode plate containing a single mixed active substance layer

A total amount of an active substance and a lithiophilic material, a conductive agent of carbon black, a binder of a styrene butadiene rubber (SBR), and a thickening agent of sodium hydroxymethylcellulose (CMC) and a lithiophilic material, at a mass ratio of 97.2 : 0.3 : 1.25 : 1.25 are added into deionized water, fully stirred, and mixed under stirring for 0.5-6 h until uniform to prepare a slurry (with a solid content of 10%) for forming a negative electrode coating. The above slurry is uniformly coated onto a current collector of a copper foil by a conventional process and then dried at a temperature of 100°C, thus forming a mixed active substance layer having a thickness of 80 $\mu$m on the current collector.

2. Preparation of a negative electrode plate containing a composite layer of a single active substance layer and a mixed active substance layer

A total amount of an active substance and a lithiophilic material, a conductive agent of carbon black, a binder of a styrene butadiene rubber (SBR), and a thickening agent of sodium hydroxymethylcellulose (CMC) at a mass ratio of 97.2 : 0.3 : 1.25 : 1.25 are added into deionized water, fully stirred, and mixed under stirring for 0.5-6 h until uniform to prepare a slurry (with a solid content of 50%) for forming a negative electrode coating. The above slurry is uniformly coated onto a current collector of a copper foil by a conventional process and then dried at a temperature of 100°C, thus forming a mixed active substance layer having a thickness of 80 $\mu$m on the current collector.

Next, an active substance, a conductive agent of carbon black, a binder of a styrene butadiene rubber (SBR), and a thickening agent of sodium hydroxymethylcellulose (CMC) at a mass ratio of 96.7 : 0.8 : 1.25 : 1.25 are added into deionized water, fully stirred, and mixed under stirring for 0.5-6 h until uniform to prepare a slurry (with a solid content of 50%) for forming a negative electrode coating. The above slurry is uniformly coated onto the surface of the mixed active substance layer formed above by a conventional process and then dried at a temperature of 100°C, thus forming a composite coating of a single active substance layer having a thickness of 40 $\mu$m and a mixed active substance layer having a thickness of 40 $\mu$m on the current collector.

3. Preparation of a negative electrode plate containing a composite layer of a single active substance layer and a single lithiophilic material layer

A lithiophilic material, a binder of a styrene butadiene rubber (SBR), and a thickening agent of sodium hydroxymethylcellulose (CMC) at a mass ratio of 1 : 0.5 : 0.5 are added into deionized water, fully stirred, and mixed under stirring for 0.5-6 h until uniform to prepare a slurry (with a solid content of 10%) for forming a negative electrode coating. The above slurry is uniformly coated onto a current collector of copper foil by a conventional process and then dried at a temperature of 100°C, thus forming a single lithiophilic material layer having a thickness of 0.3 $\mu$m on the current collector.

Next, an active substance, a conductive agent of carbon black, a binder of a styrene butadiene rubber (SBR), and a thickening agent of sodium hydroxymethylcellulose (CMC) at a mass ratio of 96.7 : 0.8 : 1.25 : 1.25 are added into deionized water, fully stirred, and mixed under stirring for 0.5-6 h until uniform to prepare a slurry (with a solid content of 50%) for forming a negative electrode coating. The above slurry is uniformly coated onto the surface of the single lithiophilic material layer formed above by a conventional process and then dried at a temperature of 100°C, thus forming a composite coating of a single lithiophilic material layer having a thickness of 0.5 $\mu$m and a single active substance layer having a thickness of 80 $\mu$m on the current collector.

The electrode plate having a current collector coated with an active substance coating and a lithiophilic material coating formed above is cold pressed and then slitted to obtain a negative electrode plate.

Preparation of battery

In an example of the present application, a cell is prepared by using the following method.

(1) Preparation of positive electrode plate

A positive electrode active substance of $LiNi_{0.8}Co_{0.1}Mn_{0.1}O_2$ (NCM811), a conductive agent of carbon black, and a binder of polyvinylidene fluoride (PVDF) at a mass ratio of 97 : 1 : 2 are mixed and added into a solvent of N-methylpyrrolidone (NMP), then fully stirred, and mixed under stirring for 0.5-6 h until uniform to prepare a positive electrode slurry (with a solid content of 65%). The positive electrode slurry is uniformly coated onto a current collector of an aluminum foil with a coating amount of 0.2-200 mg/mm$^2$ by a conventional process and then dried at a temperature of 100-130°C, followed by cold pressing and slitting to obtain a positive electrode plate.

(2) Preparation of electrolyte solution

In an argon atmosphere glove box ($H_2O < 0.1$ ppm, and $O_2 < 0.1$ ppm), an organic solvents of ethylene carbonate (EC)/ethyl methyl carbonate (EMC)/diethyl carbonate (DEC) at a volume ratio of 1 : 1 : 1 are mixed until uniform, and a 12.5% $LiPF_6$ lithium salt is dissolved into the organic solvents (with a molar concentration of 1 mol/L) and stirred until uniform to obtain an electrolyte solution for a lithium ion battery.

(3) Preparation of battery

The positive electrode plate obtained in the above steps, a polyethylene film as a separator, and a negative electrode plate are stacked in sequence as stated above, with the active substance layer of the negative electrode plate facing the separator. The stack is wound to obtain a bare cell. The bare cell is welded with tabs and put into an aluminum housing. The assembled cell is baked at 100°C for water removal, and then the electrolyte solution is injected therein to obtain an uncharged battery. The uncharged battery is successively subjected to procedures of leaving to stand, hot and cold pressing, formation, shaping, and capacity tests to obtain a lithium ion battery.

During the manufacturing of a battery, appropriately adjusting the amount of the negative electrode active substance in the negative electrode plate and the amount of the positive electrode active substance in the positive electrode plate allows the adjustment of the ratio of the lithium capacity of the negative electrode plate to the positive electrode plate in the battery.

Performance test

(1) Calculation method of ratio of lithium capacity of negative electrode plate to positive electrode plate

The amounts of the positive electrode active substance and the negative electrode active substance that are used to calculate the lithium intercalation capacity of the negative electrode (N) and the delithiation capacity of the positive electrode (P) respectively, and the ratio (N/P) of the lithium capacity of the negative electrode plate to the positive electrode plate of the corresponding battery is calculated by dividing N by P. Wherein,

$N$ = the charge gram capacity of the negative electrode × the areal density of the negative electrode × the percentage of the negative electrode active substance

$P$ = the charge gram capacity of the positive electrode × the areal density of the positive electrode × the percentage of the positive electrode active substance

(2) Measurement method for carbon shell thickness of lithiophilic material

A test sample is prepared by means of a hydrothermal synthesis method. The sample is subjected to surface cutting and grinding, and then observed by an electron microscope, so as to measure the thickness of the carbon shell in the field of view. Each carbon shell is measured at 5 positions, 30 carbon shells are measured in total, and the average value of the measurements is taken as the thickness of the carbon shell.

(3) Test method for cycling capacity retention rate

At 45°C, a battery is charged to 4.25 V at a constant current of 1/3 C, then charged to a current of 0.05 C at a constant voltage of 4.25 V, allowed for standing for 5 min, and then discharged to 2.8 V at 1/3 C, the capacity thus obtained being recorded as the initial capacity $C_0$. Then, the battery undergoes cycles under the same conditions stated above, and the discharge capacity $C_n$ of the battery after the nth cycle is recorded. The cycling capacity retention rate $P_n$ of the battery after each cycle is calculated according to the following formula:

$$P_n = (C_n/C_0) \times 100\%$$

The n is taken as the cycle life when $P_n$ decreases to less than 80%.

(4) Test method for lithiophilicity of materials

A three-electrode electrochemical cell is constructed to test the lithiophilicity of a material. The material to be tested is used as a working electrode, $Li_{0.5}FePO_4$ is used as a reference electrode, and lithium metal is used as a counter electrode. Metallic lithium is deposited on the working electrode at an extremely small current density (e.g., 10 $\mu A/cm^2$). The voltage of the working electrode relative to Li metal ($Li/Li^+$) is used as the ordinate, and the capacity is used as the abscissa.

With the increasing of the capacity, the voltage shows a trend of first decreasing and then stabilizing. In this process, when there is no inflection point on the curve or the absolute value of the voltage corresponding to the inflection point is ≤ 0.03 V, the material to be tested is of lithiophilicity. When there is an inflection point and the absolute value of the voltage corresponding to the inflection point is > 0.03 V, the material does not have lithiophilicity.

Example 1

Ag is selected as a lithiophilic substance, and the preparation method for a lithiophilic material as described above is used to obtain an Ag@C lithiophilic material, with a carbon shell having a thickness of 35 nm; a commercially available synthetic graphite is used as an active substance, with the ratio of the lithium capacity of the negative electrode plate to the positive electrode plate being 0.5; and the mass percentage of the lithiophilic material of the active substance layer is 0.5%. According to the preparation method for a negative electrode plate containing a single mixed active substance layer as described above, a coating structure containing a single mixed active substance layer is formed on two surfaces of the current collector respectively. The electrode plate formed above is dried at 100°C, followed by cold pressing and slitting to obtain the negative electrode plate in example 1.

A lithium ion battery is prepared by the method described above using the negative electrode plate in example 1. The energy density and cycle life of the lithium ion battery prepared in example 1 are measured by the test methods described above, and the results are shown in Table 1.

Examples 2-10 and comparative examples 1-4

The variables, such as the lithiophilic substance, the shell layer thickness of the lithiophilic material, the mass percentage of the lithiophilic substance of the active substance layer, the active substance, and the ratio of lithium capacity of the negative electrode plate to the positive electrode plate, etc., are changed as shown in Table 1. The other operations are the same as those in example 1, to obtain the secondary batteries in examples 2-10 and comparative examples 1-4. The results of the energy density and cycle life of the resulting secondary batteries are also shown in Table 1. No lithiophilic material is added in comparative examples 1 and 2. A carbon shell material free of a lithiophilic substance is only added in comparative example 3. In comparative example 4, the particles obtained by immobilizing Ag on silicon dioxide in the prior art is used as an alternative of a lithiophilic material.

Table 1

| No. | Active material | Capacity ratio N/P | Lithiophilic material | Mass percentage of lithiophilic material of active substance layer (%) | Carbon shell thickness of lithiophilic material (nm) | Cavity inside shell | Energy density (Wh/kg) | Cycle life (number of cycles) |
|---|---|---|---|---|---|---|---|---|
| Example 1 | Synthetic graphite | 0.5 | Ag@C | 0.5 | 35 | Yes | 370 | 620 |
| Example 2 | Silicon oxide | 0.5 | Ag@C | 0.5 | 35 | Yes | 480 | 457 |
| Example 3 | Iron oxide | 0.5 | Ag@C | 0.5 | 35 | Yes | 450 | 428 |
| Example 4 | Synthetic graphite | 0.5 | CoOx@C | 0.5 | 100 | No | 370 | 470 |
| Example 5 | Synthetic graphite | 0.5 | CoOx@C | 0.5 | 35 | Yes | 370 | 570 |
| Example 6 | Synthetic graphite | 0.5 | FeC@C | 0.5 | 35 | Yes | 370 | 506 |
| Example 7 | Natural graphite | 0.5 | ZnS@C | 0.5 | 35 | Yes | 375 | 465 |
| Example 8 | Natural graphite | 0.5 | Au@C | 0.5 | 35 | Yes | 375 | 596 |

(continued)

| No. | Active material | Capacity ratio N/P | Lithiophilic material | Mass percentage of lithiophilic material of active substance layer (%) | Carbon shell thickness of lithiophilic material (nm) | Cavity inside shell | Energy density (Wh/kg) | Cycle life (number of cycles) |
|---|---|---|---|---|---|---|---|---|
| Example 9 | Tin oxide | 0.5 | CoS@C | 0.5 | 35 | Yes | 420 | 410 |
| Example 10 | Synthetic graphite | 0.5 | GeN@C | 0.5 | 35 | Yes | 370 | 534 |
| Comparative example 1 | Synthetic graphite | 1 | - | - | - | - | 270 | 1200 |
| Comparative example 2 | Synthetic graphite | 0.5 | - | - | - | - | 375 | 265 |
| Comparative example 3 | Synthetic graphite | 0.5 | c shell | - | 35 | Yes | 370 | 260 |
| Comparative example 4 | Synthetic graphite | 1.07 | Ag@SiO$_2$ | 0.5 | 35 (non-C) | Yes | 260 | 1500 |

As can be seen from the results in Table 1, in the batteries of the present invention, the use of a lithiophilic material can achieve not only a high energy density but also a sufficient cycle life. It should be noted that the energy density of comparative examples 1 and 4 is relatively low. Although the energy density is improved in comparative examples 2 and 3, more dendrites are generated because the deposition of lithium can not be well induced, which leads to a relatively low cycle life.

Examples 11-21

Synthetic graphite is selected as the negative electrode active substance, Ag@C having a cavity therein is used as a lithiophilic material, and the variables, such as the carbon shell thickness of the lithiophilic material, the mass percentage of the lithiophilic material of the active substance layer, and the ratio (N/P) of lithium capacity of the negative electrode plate to the positive electrode plate, etc., are changed as shown in Table 2. Other operations are the same as those in example 1, to manufacture the secondary batteries in examples 11-21. The results of the energy density and cycle life of the resulting secondary batteries are also shown in Table 2.

Table 2

| No. | Capacity ratio N/P | Mass percentage of lithiophilic material of active substance layer (%) | Carbon shell thickness of lithiophilic material (nm) | Energy density (Wh/kg) | Cycle life number of cycles (number of cycles) |
|---|---|---|---|---|---|
| Example 11 | 0.2 | 0.5 | 35 | 400 | 220 |
| Example 12 | 0.9 | 0.5 | 35 | 280 | 750 |
| Example 13 | 1.07 | 0.5 | 35 | 260 | 1500 |
| Example 14 | 0.5 | 0.1 | 35 | 372 | 320 |
| Example 15 | 0.5 | 5 | 35 | 360 | 580 |

(continued)

| No. | Capacity ratio N/P | Mass percentage of lithiophilic material of active substance layer (%) | Carbon shell thickness of lithiophilic material (nm) | Energy density (Wh/kg) | Cycle life number of cycles (number of cycles) |
|---|---|---|---|---|---|
| Example 16 | 0.5 | 10 | 35 | 350 | 420 |
| Example 17 | 0.5 | 0.05 | 35 | 373 | 286 |
| Example 18 | 0.5 | 0.5 | 10 | 370 | 580 |
| Example 19 | 0.5 | 0.5 | 70 | 370 | 489 |
| Example 20 | 0.5 | 0.5 | 5 | 370 | 479 |
| Example 21 | 0.5 | 0.5 | 80 | 370 | 453 |

As can be seen from the results in Table 2, the smaller the capacity ratio N/P, the higher the energy density of the battery, and the larger the capacity ratio, the better the cycle life. The lithium ion battery manufactured by adding a lithiophilic material of the present invention in the negative electrode plate exhibits good energy density and cycle life.

Example 22

Ag is selected as a lithiophilic substance, and the preparation method for a lithiophilic material as described above is used to obtain an Ag@C lithiophilic material, with a carbon shell having a thickness of 35 nm; a commercially available synthetic graphite is used as an active substance, with the ratio of the lithium capacity of the negative electrode plate to the positive electrode plate being 0.5; and in the mixed active substance layer, the mass percentage of the lithiophilic material of the active substance layer is 0.5%. According to the preparation method for a negative electrode plate containing a composite layer of a single active substance layer and a mixed active substance layer as described above, a composite coating structure of a mixed active substance layer having a thickness of 40 $\mu$m and a single active substance layer having a thickness of 40 $\mu$m is respectively formed on two surfaces of the current collector. The electrode plate formed above is dried at 100°C, followed by cold pressing and slitting to obtain the negative electrode plate in example 22.

A lithium ion battery is prepared by means of the method described above using the negative electrode plate in example 22. The energy density and cycle life of the lithium ion battery prepared in example 22 are measured by means of the test methods described above, and the results show that a lithium ion battery having an energy density of 365 Wh/kg and a cycle life of 420 cycles is obtained.

Example 23

Ag@C is used as a lithiophilic material, with a carbon shell having a thickness of 35 nm; and a commercially available synthetic graphite is used as an active substance. According to the preparation method for a negative electrode plate containing a composite layer of a single active substance layer and a single lithiophilic material layer as described above, a composite coating structure of a single lithiophilic material layer having a thickness of 0.5 $\mu$m and a single active substance layer having a thickness of 80 $\mu$m is respectively formed on two surfaces of the current collector. The electrode plate formed above is dried at 100°C, followed by cold pressing and slitting to obtain the negative electrode plate in example 23.

A lithium ion battery is prepared by means of the method described above using the negative electrode plate in example 23. The energy density and cycle life of the lithium ion battery prepared in example 23 are measured by the test methods described above, and the results show that a lithium ion battery having an energy density of 370 Wh/kg and a cycle life of 680 times is obtained.

Examples 24-28

The thickness of the inner single lithiophilic material layer and the thickness of the outer single active substance layer are changed as shown in Table 4. Other operations are the same as those in example 23, to manufacture the secondary batteries in examples 24-28.

The results of the energy density and cycle life of the resulting secondary batteries are also shown in Table 3.

Table 3

| No. | Thickness of inner layer ($\mu$m) | Thickness of outer layer ($\mu$m) | Ratio of inner layer thickness/outer layer thickness | Energy density (Wh/kg) | Cycle life (number of cycles) |
|---|---|---|---|---|---|
| Example 24 | 0.8 | 80 | 1/100 | 369 | 658 |
| Example 25 | 0.4 | 80 | 0.5/100 | 370 | 640 |
| Example 26 | 0.16 | 80 | 0.2/100 | 370 | 340 |
| Example 27 | 4 | 80 | 5/100 | 367 | 420 |
| Example 28 | 4.8 | 80 | 6/100 | 364 | 400 |

As can be seen from the results in Table 3, the use of a negative electrode plate provided with a lithiophilic material layer between a layer only containing an active substance and a current collector can significantly improve the energy density and cycle life of a lithium ion battery.

It should be noted that the present application is not limited to the above embodiments. The above implementations are only examples, and all implementations within the scope of the technical solution of the present application that have substantially the same composition and have the same effect as the technical concept are encompassed in the technical scope of the present application. In addition, without departing from the scope of the subject matter of the present application, various modifications that may be conceived by those skilled in the art to the implementations, and other modes constructed by combining some of the constituent elements of the implementations are also encompassed in the scope of the present application.

**Claims**

1. A composite lithium metal negative electrode plate comprising a current collector and an active substance layer coated on at least one surface of the current collector, **characterized in that**

   the active substance layer comprises
   an active substance;
   and a lithiophilic material having a core-shell structure; and
   the core of the lithiophilic material contains a lithiophilic substance, and the shell thereof is a carbon material.

2. The negative electrode plate according to claim 1, **characterized in that**
   the mass percentage content of the lithiophilic material in the active substance layer is 0.1% - 5%, optionally 0.3% - 3%.

3. The negative electrode plate according to claim 1 or 2, **characterized in that**
   the lithiophilic substance is one or more of metal elementary substances, i.e., Si, Ni, Ga, Sn, In, Ge, Ti, Mo, Pt, Al, Mg, Zn, Ag, Au, Co, Fe, etc., and/or one or more of oxides, sulfides, fluorides, nitrides, chlorides, and carbides comprising the above metal elements.

4. The negative electrode plate according to any one of claims 1-3, **characterized in that**
   the carbon material shell of the lithiophilic material has a thickness of 10-70 nm.

**5.** The negative electrode plate according to any one of claims 1-4, **characterized in that**
the carbon material shell of the lithiophilic material has a cavity therein.

**6.** The negative electrode plate according to claim 5, **characterized in that**
the cavity of the lithiophilic material further contains a lithium metal therein.

**7.** The negative electrode plate according to any one of claims 1-6, **characterized in that**
the active substance is selected from one or more of a carbon-based material, a silicon-based material, and a metal oxide.

**8.** The negative electrode plate according to claim 7, **characterized in that** the carbon-based material is one or more of natural graphite, synthetic graphite, mesophase micro carbon spheres, hard carbon and soft carbon, and/or

the silicon-based material is one or two of silicon carbon, and silicon oxide, and/or
the metal oxide is one or more of iron oxide, and tin oxide.

**9.** The negative electrode plate according to any one of claims 1-8, **characterized by**
further comprising a second active substance layer free of the lithiophilic material provided outside the active substance layer.

**10.** A composite lithium metal negative electrode plate comprising a current collector and an active substance layer, **characterized by**

further comprising a lithiophilic material layer between the current collector and the active substance layer, wherein
the lithiophilic material layer comprises a lithiophilic material having a core-shell structure; and
the core of the lithiophilic material contains a lithiophilic substance, and the shell thereof is a carbon material.

**11.** The negative electrode plate according to claim 10, **characterized in that**
the ratio of the thickness of the lithiophilic material layer to the active substance layer is 0.1/100 - 6/100, optionally 0.3/100 - 5/100.

**12.** The negative electrode plate according to claim 10 or 11, **characterized in that**
the lithiophilic substance is one or more of metal elementary substances, i.e., Si, Ni, Ga, Sn, In, Ge, Ti, Mo, Pt, Al, Mg, Zn, Ag, Au, Co, Fe, etc., and/or one or more of oxides, sulfides, fluorides, nitrides, chlorides, and carbides comprising the above metal elements.

**13.** The negative electrode plate according to any one of claims 10-12, **characterized in that**
the carbon material shell of the lithiophilic material has a thickness of 10-70 nm.

**14.** The negative electrode plate according to any one of claims 10-13, **characterized in that**
the carbon material shell of the lithiophilic material has a cavity therein.

**15.** The negative electrode plate according to claim 14, **characterized in that**
the cavity of the lithiophilic material further contains a lithium metal therein.

**16.** A preparation method for a negative electrode plate according to any one of claims 1-9, **characterized by** comprising:

S1 - 1: mixing an active substance and a lithiophilic material at a predetermined ratio in a dispersion medium to prepare a slurry A; and
S1 - 2: coating the slurry A obtained in step S1 - 1 onto at least one surface of a current collector.

**17.** The preparation method for a negative electrode plate according to claim 16, **characterized by**
further comprising:

S1 - 3: dispersing an active substance into a dispersion medium to prepare a slurry B; and
S1 - 4: coating the slurry B obtained in step S1 - 3 onto the negative electrode plate obtained in step S1 - 2.

18. The preparation method for a negative electrode plate according to any one of claims 10-15, **characterized by** comprising:

> S2 - 1: dispersing a lithiophilic material into a dispersion medium to prepare a slurry C;
> S2 - 2: dispersing an active substance into a dispersion medium to prepare a slurry D;
> S2 - 3: coating the slurry C obtained in step S2 - 1 onto at least one surface of a current collector to form a lithiophilic material coating; and
> S2 - 4: coating the slurry D obtained in step S2 - 2 onto the surface of the lithiophilic material coating obtained in step S2 - 3.

19. A secondary battery, comprising a negative electrode plate according to any one of claims 1-15, and a positive electrode plate, an electrolyte solution, and a separator.

20. The secondary battery according to claim 19, **characterized in that**

> where N represents the lithium intercalation capacity of the negative electrode and P represents the delithiation capacity of the positive electrode,
> the ratio of the lithium capacity of the negative electrode plate to the positive electrode plate is N/P < 1, optionally $0.3 \leq N/P \leq 0.9$.

21. A battery module, **characterized by** comprising a secondary battery according to claim 19 or 20.

22. A battery pack, **characterized by** comprising a battery module according to claim 21.

23. A power consuming device, **characterized by** comprising at least one selected from a secondary battery according to claim 19 or 20, a battery module according to claim 21, and a battery pack according to claim 22.

Lithium precipitated
on surface of active
substance

Lithium dendrites

Layer containing
active substance

Current
collector

*FIG. 1*

6

61

63

60

*FIG. 2*

6

61    66

63

60

*FIG. 3*

FIG. 4

FIG. 5

FIG. 6

5

53

52
52

51

FIG. 7

4

5 5 5

5

FIG. 8

1

FIG. 9

FIG. 10

FIG. 11

## INTERNATIONAL SEARCH REPORT

| International application No. |
| --- |
| **PCT/CN2022/101515** |

**A. CLASSIFICATION OF SUBJECT MATTER**

H01M4/62(2006.01)i;H01M4/36(2006.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 负极, 阳极, 亲锂, 核, 壳, 碳, negative electrode, anode, lithiophilic, core, shell, carbon

**C. DOCUMENTS CONSIDERED TO BE RELEVANT**

| Category* | Citation of document, with indication, where appropriate, of the relevant passages | Relevant to claim No. |
| --- | --- | --- |
| X | CN 112447949 A (CENTRAL SOUTH UNIVERSITY) 05 March 2021 (2021-03-05) description, paragraphs 6-149, and figures 1-2 | 1-6, 16, 19-22 |
| Y | CN 112447949 A (CENTRAL SOUTH UNIVERSITY) 05 March 2021 (2021-03-05) description, paragraphs 6-149, and figures 1-2 | 3, 7-15, 17-18, 23 |
| Y | CN 114402464 A (LG ENERGY SOLUTION LTD.) 26 April 2022 (2022-04-26) description, paragraphs 4 and 16-97 | 3, 7-15, 17-18, 23 |
| X | CN 112447953 A (CENTRAL SOUTH UNIVERSITY) 05 March 2021 (2021-03-05) description, paragraphs 5-53, and figures 1-2 | 1-6, 16, 19-22 |
| Y | CN 112447953 A (CENTRAL SOUTH UNIVERSITY) 05 March 2021 (2021-03-05) description, paragraphs 5-53, and figures 1-2 | 3, 7-15, 17-18, 23 |
| X | CN 114538410 A (BEIJING UNIVERSITY OF CHEMICAL TECHNOLOGY) 27 May 2022 (2022-05-27) description, paragraphs 6-36, and figure 1 | 1-6, 16, 19-22 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 March 2023** | **22 March 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/101515** |

### C.    DOCUMENTS CONSIDERED TO BE RELEVANT

| Category* | Citation of document, with indication, where appropriate, of the relevant passages | Relevant to claim No. |
| --- | --- | --- |
| Y | CN 114538410 A (BEIJING UNIVERSITY OF CHEMICAL TECHNOLOGY) 27 May 2022 (2022-05-27) <br> description, paragraphs 6-36, and figure 1 | 3, 7-15, 17-18, 23 |
| A | US 2022069313 A1 (GLOBAL GRAPHENE GROUP, INC.) 03 March 2022 (2022-03-03) <br> entire document | 1-23 |

Form PCT/ISA/210 (second sheet) (July 2022)

**INTERNATIONAL SEARCH REPORT**
Information on patent family members

International application No.

**PCT/CN2022/101515**

| Patent document cited in search report | | | Publication date (day/month/year) | Patent family member(s) | | | Publication date (day/month/year) |
|---|---|---|---|---|---|---|---|
| CN | 112447949 | A | 05 March 2021 | CN | 112447949 | B | 27 August 2021 |
| CN | 114402464 | A | 26 April 2022 | WO | 2021221389 | A1 | 04 November 2021 |
| | | | | US | 2022399533 | A1 | 15 December 2022 |
| | | | | EP | 4020619 | A1 | 29 June 2022 |
| | | | | KR | 20210132416 | A | 04 November 2021 |
| CN | 112447953 | A | 05 March 2021 | CN | 112447953 | B | 18 March 2022 |
| CN | 114538410 | A | 27 May 2022 | None | | | |
| US | 2022069313 | A1 | 03 March 2022 | None | | | |

Form PCT/ISA/210 (patent family annex) (July 2022)